Europäisches Patentamt

European Patent Office

Office européen des brevets

(19)

(11) Numéro de publication: **0 233 820**
**B1**

(12)

# FASCICULE DE BREVET EUROPEEN

(45) Date de publication du fascicule du brevet:
24.01.90

(51) Int. Cl.⁴: **F16D 43/16**

(21) Numéro de dépôt: 87400254.6

(22) Date de dépôt: 04.02.87

(54) Embrayage centrifuge pour actionneur de condamnation d'une serrure de porte de véhicule automobile.

(30) Priorité: 20.02.86 FR 8602323

(43) Date de publication de la demande:
26.08.87 Bulletin 87/35

(45) Mention de la délivrance du brevet:
24.01.90 Bulletin 90/4

(84) Etats contractants désignés:
DE ES GB IT SE

(56) Documents cités:
EP-A- 0 064 942
DE-B- 1 255 997
FR-A- 2 106 250
GB-A- 405 007
GB-A- 856 525
US-A- 2 521 943
US-A- 3 367 465
US-A- 3 810 533
US-A- 4 160 389

(73) Titulaire: ROCKWELL-CIM, 6, rue Barbès Boite
Postale 70, F-92302 Levallois Cedex(FR)

(72) Inventeur: Noel, Jean-Pierre, 100, rue Gaston Save,
F-88100 Saint Die(FR)

(74) Mandataire: Bressand, Georges et al, c/o CABINET
LAVOIX 2 Place d'Estienne d'Orves, F-75441 Paris
Cédex 09(FR)

ACTORUM AG

## Description

La présente invention a pour object un embrayage centrifuge pour actionneur de condamnation d'une serrure de porte de véhicule automobile.

On connait des actionneurs de condamnation d'une serrure de porte de véhicule automobile comportant un moteur électrique dont l'arbre de sortie est relié à un train d'engrenages, ainsi que des moyens de transformation d'un mouvement de rotation en un mouvement linéaire de translation (US-A 160 389). Ce système peut comprendre, par exemple, un manchon taraudé de commande de l'organe de condamnation. Ces embrayages sont du type comportant, comme décrit par exemple par le FR-A 2 106 250, des masselottes disposées dans une cloche radialement à l'arbre de sortie du moteur, soumises à l'action d'organes élastiques de rappel vers une position débrayée de repos et susceptibles d'être entraînées par la rotation de l'arbre du moteur vers une position d'embrayage où elles sont en prise avec la cloche, cette dernière étant munie d'un pignon d'entraînement du train d'engrenages.

Dans les embrayages connus jusqu'à présent, le montage des masselottes centrifuges et de leurs ressorts de rappel s'effectue par un alésage axial d'un manchon cylindrique percé de logements radiaux. Ce montage est particulièrement malaisé et présente donc des difficultés d'exécution.

En outre, on constate, dans les embrayages tels que celui du US-A 4 160 389, un patinage gênant en fin de course de l'actionneur, dont la structure complexe rend par ailleurs sa fabrication onéreuse.

L'invention a pour but de réaliser un embrayage centrifuge agencé de telle façon que les masselottes puissent être mises en place de façon extrêmement simple et aisée.

Suivant l'invention, lesdits moyens de transformation comprennent un manchon taraudé de commande d'un organe de condamnation, cet embrayage comportant des masselottes disposées dans une cloche radialement à l'arbre de sortie du moteur, soumises à l'action d'organes élastiques de rappel vers une position débrayée au repos et susceptibles d'être entraînées par la rotation de l'arbre du moteur dans une position d'embrayage où elles sont en prise avec la cloche, cette dernière étant munie d'un pignon d'entraînement du train d'engrenages, et les masselottes sont montées dans un support constitué par un moyeu pourvu de deux branches par masselotte sensiblement axiales, entourant les masselottes en délimitant un logement pour celles-ci, et par un couvercle fermant ce logement, fixé sur le moyeu, ce couvercle et le moyeu étant agencés pour permettre le déplacement radial des masselottes vers la cloche sous l'effet de la force centrifuge.

Ainsi le support des masselottes est formé par deux pièces distinctes, le moyeu et le couvercle fixé sur le moyeu, par exemple par clipsage ou vissage. Il devient donc extrêmement facile de mettre en place les masselottes et leurs organes élastiques de rappel, en les positionnant d'abord dans le logement du moyeu, puis en fixant le couvercle sur celui-ci, opérations qui ne présentent aucune difficulté.

Suivant une particularité de l'invention, l'arbre de sortie du moteur traverse la totalité de l'embrayage, c'est-à-dire le moyeu, l'intervalle réservé entre les masselottes, le couvercle, la cloche et le pignon solidaire de cette dernière, un palier de support étant fixé à cet arbre au-delà du pignon et les masselottes étant en butée au repos sur ledit arbre.

Le fait que l'arbre moteur traverse l'ensemble de l'embrayage lui permet de servir de support à la totalité de celui-ci, et de butée au repos pour les masselottes, dont il définit la position de repos.

D'autres particularités et avantages de l'invention apparaitront au cours de la description qui va suivre, faite en référence aux dessins annexés qui en illustrent à titre d'exemple non limitatif un mode de réalisation:

— la Figure 1 est une vue en perspective d'un actionneur de condamnation d'une serrure de porte de véhicule automobile muni d'un embrayage pouvant être du type visé par l'invention;

— la Figure 2 est une vue en coupe axiale d'un mode de réalisation d'un embrayage centrifuge conforme à l'invention, pouvant équiper l'actionneur de la Figure 1;

— la Figure 3 est une vue en coupe axiale suivant III-III de la Figure 2; et

- la Figure 4 est une vue en coupe transversale suivant IV-IV des Figures 2 et 3.

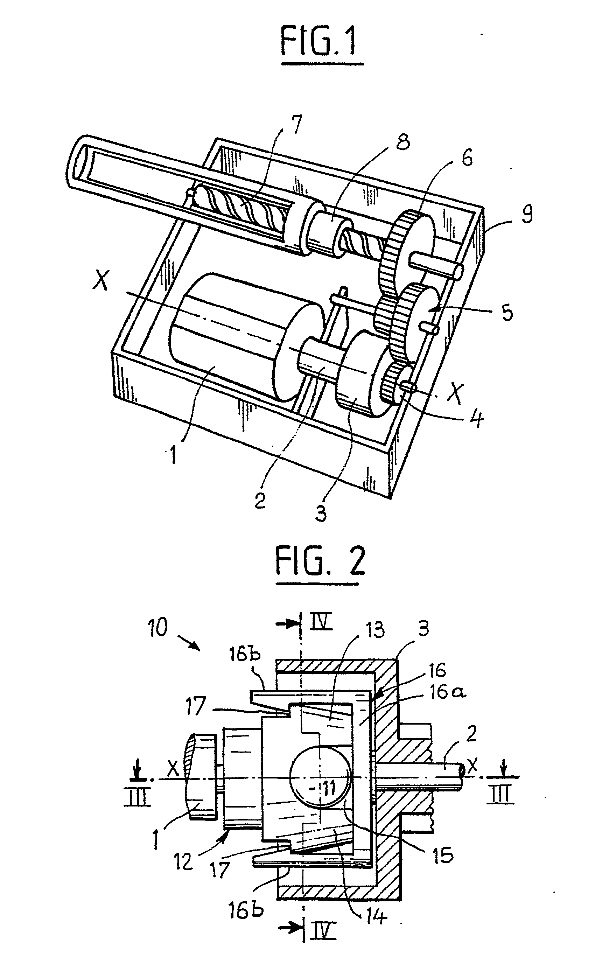

L'actionneur représenté à la Figure 1 est destiné à permettre la condamnation électrique d'une serrure non représentée d'une porte de véhicule automobile.

Il comporte un moteur électrique 1 équipé d'un arbre moteur de sortie 2 d'axe X-X, pouvant coopérer avec une cloche coaxiale 3 munie d'un pignon 4 constituant le premier élément d'un train d'engrenages 5. Le dernier pignon 6 du train 5 est fixé coaxialement à une vis 7 sur laquelle est monté un manchon taraudé 8 qui peut être entraîné en translation par la rotation de la vis 7, pour actionner l'organe de condamnation (non représenté) de la serrure, l'ensemble des pièces précitées étant disposé dans un boîtier 9.

L'embrayage 10 représenté aux Figures 2 à 4 comporte des masselottes 11, au nombre de deux dans cet exemple, montées mobiles radialement à l'arbre moteur 2 à l'intérieur de la cloche 3. Les masselottes 11, constituées dans cet exemple par des pièces cylindriques chacune pourvue à sa base d'une collerette saillante 11a, sont montées dans un support constitué par deux pièces distinctes, à savoir : un moyeu 12 pourvu de deux branches 13, 14 sensiblement axiales, c'est-à-dire s'étendant à peu près parallèlement à l'arbre de sortie 2 du moteur 1 en entourant les masselottes 11 et en délimitant pour celles-ci un logement 15 ouvert dans la direction axiale (axe XX), la seconde pièce étant constituée par un couvercle 16 fermant le logement 15.

Le couvercle 16 comporte une première partie 16a perpendiculaire à l'axe X-X de l'arbre 2, de façon à pouvoir obturer axialement le logement 15 et une seconde partie formée par deux bras 16b parallèles à l'axe X-X et qui, dans l'exemple illustré (Figure 2) sont solidarisés avec des crans 17 du moyeu 12 par clipsage. En variante, les bras longitudinaux 16b pourraient également être réalisés de manière à pouvoir être vissés sur un filetage correspondant ménagé sur le moyeu 12.

Bien entendu, le couvercle 16 est agencé pour permettre le déplacement radial des masselottes 11 vers la cloche 3 sous l'effet de la force centrifuge lorsque l'arbre 2 est entraîné par le moteur 1.

Le moyeu 12, réalisé de préférence en une matière plastique appropriée, est surmoulé sur un insert 18 emmanché à force sur l'arbre 2. Ce montage par l'intermédiaire de l'insert 18 permet une meilleure transmission du couple moteur de l'arbre 2 au moyeu 12.

L'insert 18 est métallique , de même que les masselottes 11, les autres éléments de l'embrayage 10 étant de préférence réalisés en matière plastique.

L'arbre 2 du moteur 1 traverse la totalité de l'embrayage, c'est-à-dire l'insert 18 et le moyeu 12, l'intervalle réservé entre les masselottes 11, le couvercle 16, la cloche 3 et le pignon terminal 4 solidaire de cette dernière, un palier 19 de support de l'arbre 2 étant fixé à ce dernier au-delà du pignon 4.

Les masselottes 11 sont sollicitées élastiquement vers leur position de repos en appui par leurs collerettes 11a sur l'arbre 2 dans des position diamétralement opposées, par des ressorts respectifs 21. Ceux-ci prennent appui sur des épaulements 20, 23 intérieurs respectivement au moyeu 12 et au couvercle 16, et sollicitent les masselottes 11 par leurs collerettes 11a vers leur position de repos en butée sur l'arbre 2.

Le logement 15 délimité par les branches 13, 14 et fermé axialement par le couvercle 16 débouche radialement des deux côtés vers le paroi intérieure de la cloche 3, de façon à permettre aux masselottes 11 de coulisser radialement vers la cloche 3, contre la force antagoniste de rappel des ressorts 21, lorsque l'arbre 2 tourne à une vitesse suffisante.

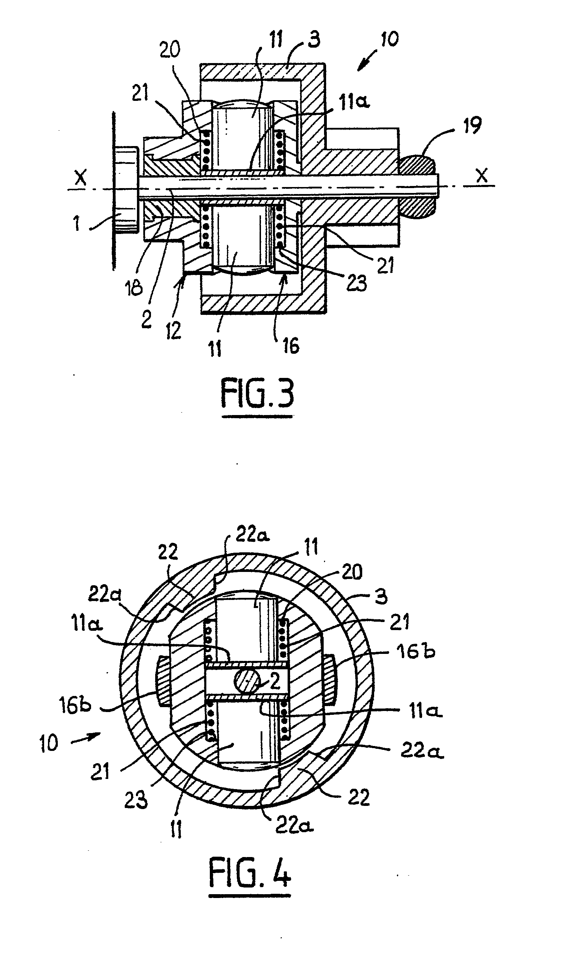

La cloche 3 est intérieurement pourvue de taquets 22 d'embrayage, au nombre de deux diamétralement opposés dans l'exemple décrit (Figure 4) et qui sont susceptibles de coopérer avec les masselottes respectives 11. Les taquets 22 sont avantageusement pourvus chacun de deux chanfreins 22a parallèles à des génératrices des masselottes 11.

Ces chanfreins 22a augmentent la surface de contact des taquets 22 avec les masselottes 11 lorsque celles-ci s'écartent de l'arbre 2.

Le fait que conformément à l'invention le support des masselottes 11 soit constitué de deux pièces distinctes 12 et 16 permet, avant montage du couvercle 16, d'introduire axialement les masselottes 11 en place dans leur logement 15 sans difficulté, ce qui constitue un avantage important par rapport aux réalisations antérieures connues. De plus, un autre avantage substantiel réside dans le fait que cette structure de l'embrayage centrifuge visé par l'invention permet de faire exécuter la mise en place des masselottes 11 par une machine automatique connue en soi, munie de bras appropriés, ce qui était impossible avec les réalisations antérieures.

L'invention n'est pas limitée au mode de réalisation décrit et peut comporter des variantes d'exécution. Par exemple les masselottes 11 peuvent être en nombre différent de deux, par exemple trois, et avoir une forme autre que cylindrique. De même, le moyeu 12 et le couvercle 16 peuvent avoir des conformations différentes de celles représentées aux dessins, dans la mesure où ils constituent toujours deux pièces séparées délimitant le logement des masselottes.

## Revendications

1. Embrayage centrifuge (10) pour actionneur de condamnation d'une serrure de porte de véhicule automobile, destiné à être interposé entre un moteur électrique (1) et un train d'engrenages (5) comportant des moyens de transformation d'un mouvement de rotation en un mouvement linéaire de translation caractérisé en ce que lesdits moyens de transformation comprennent une vis (7) sur laquelle est monté un manchon taraudé (8) de commande d'un organe de condamnation, cet embrayage comportant des masselottes (11) disposées dans une cloche (3) radialement à l'arbre (2) de sortie du moteur (1), soumises à l'action d'organes élastiques (21) de rappel vers une position débrayée au repos et susceptibles d'être entrainées par la rotation de l'arbre (2) du moteur (1) dans une position d'embrayage où elles sont en prise avec la cloche (3), cette dernière étant munie d'un pignon (4) d'entraînement du train d'engrenages (5), et les masselottes (11) sont montées dans un support constitué par un moyeu (12) pourvu de deux branches (13, 14) par masselotte sensiblement axiales, entourant les masselottes (11) en délimitant un logement (15) pour celles-ci, et par un couvercle (16) fermant ce logement (15), fixé sur le moyeu (12), ce couvercle (16) et le moyeu (12) étant agencés pour permettre le déplacement radial des masselottes (11) vers la cloche (3) sous l'effet de la force centrifuge.

2. Embrayage selon la revendication 1, caractérisé en ce que l'arbre (2) de sortie du moteur traverse la totalité de l'embrayage, c'est-à-dire le moyeu (12), l'intervalle réservé entre les masselottes (11), le couvercle (16), la cloche (3) et le pignon (4) solidaire de cette dernière, un palier (19) de support étant fixé à cet arbre (2) au-delà du pignon (14), et les masselottes (14) étant en butée au repos sur ledit arbre.

3. Embrayage selon l'une des revendications 1 et 2, caractérisé en ce que le moyeu (12) est surmoulé sur un insert (18) emmanché à force sur l'arbre (2).

4. Embrayage selon l'une des revendications 1 à 3, dans lequel la cloche (3) est pourvue intérieurement de taquets (22) d'embrayage susceptibles de coopérer avec les masselottes (11), lesquelles sont cylindriques, caractérisé en ce que ces taquets (22) présentent des chanfreins (22a) parallèles à des génératrices des masselottes (11).

5. Embrayage selon l'une des revendications 1 à 4, caractérisé en ce que les organes de rappel des masselottes (11) sont des ressorts (21) prenant appui sur des épaulements (22, 23) intérieurs du moyeu (12) et du couvercle (3), et sollicitent les masselottes (11) en butée sur l'arbre (2) du moteur (1) par action sur des collerettes (11a) solidaires de la base desdites masselottes.

## Claims

1. A centrifugal clutch (10) for actuating the locking of a motor vehicle door latch, intended to be interposed between an electric motor (1) and a gear train (5) comprising means for transforming a rotational motion into a translational linear motion, characterized in that the said transformation means comprise a screw (7) whereon there is mounted a tapped sleeve (8) for controlling a locking element, this clutch comprising weights (11) disposed in a cup (3) radially to the output shaft (2) of the motor, which are subjected to the action of elastic members (21) for biasing it towards a declutched position of rest, and capable of being driven by the rotation of the shaft (2) of the motor (1) into a clutching position wherein they are engaged with the cup (3), this latter being provided with a pinion (4) for driving the gear train (5), and the weights (11) are mounted in a support constituted by a hub (12) provided with two branches (13, 14) per weight which are substantially axial, surrounding the weights (11) and delimiting a housing (15) for the latter, and by a cover (16) closing this housing (15) and fixed to the hub (12), this cover (16) and the hub (12) being arranged to allow the radial displacement of the weights (11) towards the cup (3) under the effect of the centrifugal force.

2. A clutch according to claim 1, characterised in that the output shaft (2) of the motor passes through the whole of the clutch, that is to say, the hub (12), the gap provided between the weights (11), te cover (16), the cup (3) and the pinion (4) fixed to this latter, a support bearing (19) being fixed to this shaft (2) beyond the pinion (14), and the weights (11) bearing on the said shaft when at rest.

3. A clutch according to one of claims 1 and 2, characterised in that the hub (12) is moulded on to an insert (18) which is force-fitted on the shaft (2).

4. A clutch according to one of claims 1 to 3, wherein the cup (3) is provided internally with clutch dogs (22) capable of cooperating with the weights (11) which are cylindrical, characterized in that these dogs (22) have chamfers (22a) parallel to generatrices of the weights (11).

5. A clutch according to one of claims 1 to 4, characterized in that the elements for returning the weights (11) are springs (21) bearing on inner shoulders (22, 23) of the hub (12) and of the cover (3), and bias the weights (11) to bear on the shaft (2) of the motor (1) by action on flanges (11a) fixed to the base of the said weights.

## Patentansprüche

1. Zentrifugalkupplung (10) für die Betätigung der Verriegelung eines Kraftfahrzeug-Türschlosses, die zwischen einen Elektromotor (1) und ein Getriebe (5) mit Einrichtungen zur Umformung einer Drehbewegung in eine geradlinige Bewegung eingesetzt werden soll, dadurch gekennzeichnet, daß die Umformungseinrichtungen aus einer Schnecke (7) bestehen, auf der eine Gewindemuffe (8) zum Antrieb eines Verriegelungsorgans montiert ist, daß die Kupplung Fliehgewichte (11) besitzt, die in einer Glocke (3) radial zur Ausgangswelle (2) des Motors (1) angeordnet sind, durch elastische Rückholorgane (21) im Ruhezustand in Richtung auf eine ausgekuppelte Stellung beaufschlagt sind und durch die Drehung der Welle (2) des Motors (1) in eine eingekuppelte Stellung gebracht werden können, in der sie mit der Glocke (3) in Eingriff sind, daß die Glocke (3) mit einem Zahnrad (4) zum Antrieb des Getriebes (5) versehen ist und daß die Fliehgewichte (11) in einem Halter montiert sind, der aus einer Nabe (12) mit zwei im wesentlichen axialen Schenkeln (13, 14) pro Fliehgewicht, die die Fliehgewichte (11) umgeben und eine Kammer (15) zu deren Aufnahme abgrenzen, und aus einem Deckel (16) bestehen, der die Kammer (15) verschließt und an der Nabe (12) befestigt ist, wobei der Deckel (16) und die Nabe (12) so ausgebildet sind, daß sie die radiale Bewegung der Fliehgewichte (11) auf die Glocke (3) zu unter der Einwirkung der Fliehkraft gestatten.

2. Kupplung nach Anspruch 1, dadurch gekennzeichnet, daß die Ausgangswelle (2) des Motors die gesamte Kupplung durchquert, d.h. die Nabe (12), den freien Zwischenraum zwischen den Fliehgewichten (11), den Deckel (16), die Glocke (3) und das an dieser befestigte Zahnrad (4), wobei außerhalb des Zahnrads (4) an der Welle (2) ein Lager (19) befestigt ist und die Fliehgewichte (14) im Ruhezustand an der Welle in Anschlag sind.

3. Kupplung nach einem der Ansprüche 1 und 2, dadurch gekennzeichnet, daß die Nabe (12) auf einen auf die Welle (2) aufgepreßten Einsatz aufgegossen ist.

4. Kupplung nach einem der Ansprüche 1 bis 3, bei der die Glocke (3) innen mit Kupplungsanschlägen (22) versehen ist, die mit den Fliehgewichten (11), die zylindrisch sind, zusammenwirken können, dadurch gekennzeichnet, daß die Anschläge (22) zu Erzeugenden der Fliehgewichte (11) parallele Abschrägungen (22a) besitzen.

5. Kupplung nach einem der Ansprüche 1 bis 4, dadurch gekennzeichnet, daß die Rückholorgane der Fliehgewichte (11) Federn (21) sind, die sich an im Inneren der Nabe (12) und des Deckels (3) vorgesehenen Schultern (22, 23) abstützen und die Fliehgewichte (11) durch Einwirkung auf Flansche (11a), die an der Basis der Fliehgewichte befestigt sind, so beaufschlagen, daß sie an der Welle (2) des Motors (1) in Anschlag kommen.

# FIG.1

# FIG. 2

## FIG.3

## FIG.4